# EUROPÄISCHE PATENTSCHRIFT

(11) **EP 2 691 206 B1**
(45) Veröffentlichungstag und Bekanntmachung des Hinweises auf die Patenterteilung: **29.05.2019**
(21) Anmeldenummer: 12713647.1
(22) Anmeldetag: 23.03.2012
(51) Int. Cl.: B23K 26/08, B23K 26/36

(54) **VERFAHREN ZUR LASERSTRAHLBEARBEITUNG EINES WERKSTÜCKS**
METHOD FOR MACHINING A WORKPIECE BY MEANS OF A LASER BEAM
PROCÉDÉ D'USINAGE PAR FAISCEAU LASER D'UNE PIÈCE

(30) Priorität: 31.03.2011 DE 102011001710
(43) Veröffentlichungstag der Anmeldung: 05.02.2014
(73) Patentinhaber: ThyssenKrupp Steel Europe AG, 47166 Duisburg (DE)
(72) Erfinder: KOCH, Martin, 47506 Neukirchen-Vluyn (DE); WISCHMANN, Stefan, 10437 Berlin (DE); BLUMENSAAT, Erwin, 44357 Dortmund (DE)
(74) Vertreter: Cohausz & Florack
(86) Internationale Anmeldenummer: PCT/EP2012/055213
(87) Internationale Veröffentlichungsnummer: WO 2012/130758

(56) Entgegenhaltungen:
- WO-A1-02/38323
- DE-A1- 10 060 407
- US-A- 5 517 420
- US-A1- 2007 296 966

## Beschreibung

Die Erfindung betrifft ein Verfahren zur Laserstrahlbearbeitung eines Werkstücks, insbesondere eines Bauteils eines Kraftfahrzeugs, wobei ein Laserstrahl mittels eines Scanners auf das Werkstück gebracht, Material des Werkstücks abgetragen wird, die bei dem Prozess in dem Arbeitsbereich durch das Plasma entstehende Strahlung und/oder reflektierte Laserstrahlung detektiert wird und abhängig von der detektierten Plasma- und/oder Laserstrahlung ein Signal erzeugt wird und wobei in Abhängigkeit von dem Signal die Position des Laserstrahls in Bezug auf das Werkstück und/oder die Abtragstiefe geregelt und/oder gesteuert wird.
Als Alternative zu herkömmlichen mechanischen Bearbeitungsprozessen, wie Fräsen, Sägen oder Stanzen, von Werkstoffen, beispielsweise Stahl, etabliert sich zunehmend die Bearbeitung mittels eines Laserstrahls. Die Bearbeitung von Werkstücken mittels Laserstrahlen hat mehrere Vorteile. Zum einen kann eine Abnutzung und ein Verschleiß des Werkzeugs vollständig vermieden werden, da die Energie der Laserstrahlung in das Werkstück eingekoppelt wird und kein verschleißbehaftetes Werkzeug benutzt werden muss. Somit können auch Werkstücke, welche aufgrund ihrer Härte oder Sprödigkeit gar nicht oder nur mit sehr hohem Aufwand mechanisch bearbeitet werden können, effizient bearbeitet werden. Zum anderen können durch die Verwendung des Laserstrahls und die Vorgabe einer Kontur, der der

Laserstrahl folgt, nahezu beliebig komplexe oder feine Strukturen auf das Werkstück projiziert werden, die abgetragen, ausgeschnitten oder verschweißt werden können. Gerade im Bereich der stahlverarbeitenden Industrie oder der Automobilindustrie müssen häufig sehr harte Materialien in vergleichsweise komplexe Formen gebracht werden.

So ist beispielsweise in der Druckschrift DE 10 2006 052 824 B4 ein Verfahren zum Laserstrahlschneiden eines metallischen Bauteils bekannt, bei dem der Laserstrahl während des Abfahrens der Schnittkontur oszillierend bewegt wird. Eine Detektion der durch das Plasma entstehenden Strahlung und/oder der reflektierten Laserstrahlung findet allerdings nicht statt.

Aus der Druckschrift DE 102 61 667 A1 ist hingegen ein Verfahren und eine Vorrichtung zum Laserschneiden bekannt, wobei das Plasma kontinuierlich beobachtet wird und mit der Qualität des Schneidvorgangs in Verbindung gebracht wird. Ist die Qualität des Werkstücks nicht ausreichend, wird das Werkstück verworfen.

Die DE 100 60 407 A1 offenbart ein Verfahren zum Laserstrahlbohren von Sacklöchern in Mehrschichtplatinen. Der Laserstrahl wird mittels Scannerspiegel auf die zu bearbeitende Oberfläche fokussiert. Zur Erfassung der Bohrtiefe werden Plasma-Strahlungsdetektoren eingesetzt, die die Strahlungsintensität des Plasmas erfassen, das beim Bohren der Öffnung von den unterschiedlichen Schichten der Platine erzeugt wird. In Abhängigkeit von dem generierten Signal kann der Bohrprozess gesteuert werden

Des Weiteren ist aus der WO 02/38323 A1 ein Verfahren bekannt, welches mittels einer Laserablation durch geeignete Mittel Informationen über die Tiefe und die geometrische Ausgestaltung des abgetragenen Bereichs ermittelt.

Das Ergebnis des Bearbeitungsprozesses kann durch eine Reihe von Parametern beeinflusst werden. Diese Parameter sind beispielsweise das Material des Werkstücks, die durch den Laserstrahl in das Werkstück eingekoppelte Leistung, die Wellenlänge der Laserstrahlung oder die Lage des Fokus der fokussierten Laserstrahlung. Diese Faktoren werden häufig im Voraus durch entsprechende Versuche ermittelt.

Bei konventionellen Laserbearbeitungsanlagen wird die Geschwindigkeit des Prozesses hauptsächlich durch die erreichbare Geschwindigkeit der Positioniersysteme begrenzt, bei der noch eine konturgetreue Bearbeitung möglich ist, hier können 5 - 10 m/min erreicht werden. Bei höheren Geschwindigkeiten können entweder feine Konturen nicht mehr beachtet werden oder die Positioniergenauigkeit ist zu gering. Zum andern wird die Prozessgeschwindigkeit auch durch die erreichbaren Intensitäten der Laserstrahlung begrenzt, da bei geringen Intensitäten die Kontur entsprechend langsam oder oft abgefahren werden muss.

Um dem entgegenzuwirken wurden Hochleistungsscanner mit Hochleistungslasern kombiniert. Durch die Verwendung von Hochleistungsscannern kann eine sehr schnelle Strahlablenkung erfolgen, wobei gleichzeitig durch die Verwendung von Hochleistungslasern hohe Intensitäten der Laserstrahlung erreicht werden.

Bei ausreichend hohen Intensitäten ist es möglich, dass das das Material des Werkstücks nicht wie üblich schmilzt und durch ein Prozessgas ausgetrieben werden muss, sondern nahezu vollständig sublimiert, oder eventuell entstehende Schmelze auch ohne Prozessgas ausreichend durch den entstehenden Dampfdruck ausgetrieben wird.

Um die erforderlichen Intensitäten der Laserstrahlung zu ermöglichen, wird diese in der Regel durch optische Komponenten so fokussiert, dass sich der Fokus auf der Oberfläche oder in der Nähe des Werkstücks befindet. Hohe Intensitäten werden zudem durch eine entsprechend starke Fokussierung des Laserstrahls erreicht. Dies hat jedoch zur Folge, dass der Durchmesser des Laserstrahls (der Spot) senkrecht zur Laserstrahlachse im Arbeits- bzw. Fokusbereich eine entsprechend kleine Ausdehnung aufweist. Einerseits können mit geringen Spotdurchmessern entsprechend feineren Konturen auf dem Werkzeug abgefahren werden. Andererseits bringt die Verwendung von kleinen Spotdurchmessern aber auch Nachteile in Bezug auf die Qualität des Bearbeitungsergebnisses mit sich. So müssen erhöhte Anforderungen an die Positionierung des Laserstrahls und somit des Spots, dessen Durchmesser im Bereich von 0,1 mm liegt, gestellt werden. Werden zusätzlich zum Scanner weitere Positioniersysteme verwendet, kann eine exakte Positionierung nicht mehr gewährleistet werden. Aufgrund des kleinen Spotdurchmessers kann es außerdem passieren, dass sich bereits abgetragene Bereiche mit geschmolzenem Material wieder zusetzen. So kann sich beispielsweise eine Schneidfuge wieder verschließen.

Hiervon ausgehend liegt der vorliegenden Erfindung die Aufgabe zugrunde, ein Verfahren anzugeben, mit denen eine größere Prozesssicherheit bei der Laserstrahlbearbeitung gewährleistet werden kann.

Gemäß der Lehre der vorliegenden Erfindung wird die oben aufgezeigte Aufgabe verfahrensmäßig dadurch gelöst, dass der Prozess in mehreren Abtragszyklen durchgeführt wird und ein Abtragszyklus, insbesondere der letzte Abtragszyklus, in Abhängigkeit vom Signal wiederholt oder teilweise wiederholt wird, derart, dass eine Korrektur der Positionierung des Laserstrahls auch erst im nächsten Abtragszyklus in einer vorgegebenen Kontur (Schnittfuge) erfolgt.

Es hat sich gezeigt, dass bei der Verwendung eines Scanners zur Materialbearbeitung mittels eines Laserstrahls das Signal, welches abhängig von der beim Bearbeitungsprozess durch das Plasma entstehenden Strahlung und/oder der reflektierten Laserstrahlung erzeugt wird, zur Regelung oder Steuerung des Bearbeitungsprozesses genutzt werden kann. Es kann beispielsweise auf einfache Weise sichergestellt werden, dass die Position und/oder Abtragstiefe des Laserstrahls sich in einem engen Toleranzbereich in Bezug auf die vorgegebene Kontur und/oder Tiefe befindet. Aufschluss über die tatsächliche Positionen und/oder Abtragstiefe können beispielsweise die Intensität, die spektrale Zusammensetzung des detektierten Signals und/oder die zeitliche Änderung des Signals geben. Unter einer Änderung der Position des Laserstrahls in Bezug auf das Werkstück sind eine Änderung der Position auf dem Werkstück und/oder eine Änderung der Fokuslage beispielsweise durch eine dynamische Änderung der Brennweite zu verstehen. Unter der Abtragstiefe wird im Wesentlichen die durch den Materialabtrag verursachte Tiefe des Abtrags senkrecht zur Materialoberfläche verstanden. Vorzugsweise wird über das erzeugte Signal zusätzlich Einfluss auf den weiteren Verlauf der Verarbeitung genommen, indem Parameter wie die Position des Laserstrahls, die Leistung der Laserstrahlung, die Geschwindigkeit des Laserstrahls und/oder die Anzahl von Abtragszyklen beeinflusst werden. Auf diese Weise können beispielsweise Ungenauigkeiten in der durch weitere Positioniersysteme verursachten Bewegung des zu bearbeitenden Bauteils ausgeglichen werden, die ansonsten zu einer nicht mehr konturgetreuen Bearbeitung führen würden. Wird die Bearbeitung in mehreren Abtragszyklen durchgeführt, kann eine Korrektur der Positionierung auch erst im nächsten Abtragszyklus erfolgen. Die Abtragstiefe kann beispielsweise dadurch verändert werden, dass die Geschwindigkeit des Abfahrens der Kontur mit dem Laser, die Laserleistung oder die Anzahl der Abtragszyklen variiert wird.

In einer vorteilhaften Ausgestaltung des erfindungsgemäßen Verfahrens wird das Material des Werkstücks durch die Laserstrahlbearbeitung abgetragen oder das Werkstück geschnitten. Ist die Intensität der Laserstrahlung im Arbeitsbereich ausreichend hoch, kann das abzutragende Material aufgeschmolzen werden. Es ist allerdings besonders vorteilhaft, wenn die Intensität ausreicht, um das abzutragende Material des Werkstücks zu großen Teilen direkt zu sublimieren. Dadurch entfällt der Aufwand, den Austrieb der Schmelze aus dem abgetragenen Bereich ermöglichen zu müssen. Durch das Abtragen des Materials können mechanische Prozesse wie Stanzen oder Gravieren durch ein berührungsloses Verfahren ersetzt werden. Wird der Abtragprozess entweder mit ausreichend häufigen Wiederholungen der Abtragung oder mit ausreichend hoher Leistung ausgeführt, kann das Werkstück auch lokal vollständig durchtrennt werden. Hierbei kann sowohl das Werkstück beschnitten und überschüssiges Material beispielsweise im Randbereich entfernt werden, als auch Löcher, Schlitze, Bohrungen oder sonstige Konturen in das Werkstück gebracht werden.

Es hat sich als besonders vorteilhaft herausgestellt, wenn in Abhängigkeit vom Signal die Position des Laserstrahls in Bezug auf das Werkstück senkrecht zur Scanrichtung geändert wird. Unter der Scanrichtung wird im Wesentlich die Richtung verstanden, in die sich der Spot auf dem Werkstück momentan bewegt. Bei einer geraden Kontur, beispielsweise einer gerade Schnittfuge, ist diese Richtung während des Abfahrens der Kontur konstant. Jedoch können auch krummlinige oder unterbrochene Konturen abgefahren werden. Bei kleinen Spotdurchmessern ist die exakte Positionierung des Laserstrahls besonders wichtig, um die vorgegebene Kontur abfahren zu können. Muss der Spot beispielsweise in einer bereits vorhandene Vertiefung oder Schnittfuge positioniert werden, deren Breite in der Größe des Spotdurchmessers liegt, oder muss der Spot eine Kontur entlang einer Kante, auf welche möglichst nicht durch den Laserstrahl eingewirkt werden soll, also welche beispielsweise nicht aufgeschmolzen werden soll, bewegt werden, ist vor allem eine möglichst genaue Positionierung senkrecht zur Scanrichtung wichtig. Hierbei ist es besonders vorteilhaft, wenn in Abhängigkeit der Intensität des Signals die Position des Laserstrahls in Bezug auf das Werkstück senkrecht zur Scanrichtung geändert wird, da sich die Intensität mit der Position des Spots auf dem Werkstück ändern kann.

Gemäß einer nächsten weitergebildeten Ausführungsform des erfindungsgemäßen Verfahrens wird der Prozess in mehreren Abtragszyklen insbesondere in Abhängigkeit von der Materialdicke durchgeführt. Unter einem Abtragszyklus wird im Wesentlichen das Abfahren einer vorgegebenen Kontur durch den Laserstrahl verstanden. Dies kann nach Bedarf wiederholt werden. Die Konturen können, müssen hierbei aber nicht identisch sein. Beispielsweise kann die Kontur eines Abtragszyklus auch nur teilweise der vorherigen entsprechen. Auch andere Parameter, wie die Geschwindigkeit des Abfahrens der Kontur oder die Laserleistung können in den mehreren Abtragszyklen oder auch innerhalb eines Abtragszyklus variieren. Auf diese Weise können im Falle des Abtragens oder Schneidens auch Werkstücke bearbeitet werden, bei denn mehr Material abgetragen werden muss oder der Materialabtragprozess ineffizienter ist.

Wird ein Abtragszyklus, insbesondere der letzte Abtragszyklus, in Abhängigkeit von dem durch die Detektion der Strahlung des Plasmas und/oder der reflektierten Laserstrahlung erzeugten Signal wiederholt oder teilweise wiederholt, kann sichergestellt werden, dass ein gewünschtes Bearbeitungsergebnis erreicht wird. Aufgrund von Unregelmäßigkeiten im Werkstück oder unvermeidbaren Unregelmäßigkeiten des Bearbeitungsprozesses kann beispielsweise eine zuvor festgelegte Anzahl an Abtragszyklen nicht ausreichen. Soll beispielsweise das Werkstück vollständig durchtrennt werden oder bis zu einer bestimmten Materialschicht abgetragen werden, kann der Fortschritt des Abtragsprozesses anhand der Intensität oder der spektralen Zusammensetzung des Signals erkannt werden. Ist in einzelnen Bereichen der Kontur, beispielsweise einer Krümmung, oder auf der gesamten Kontur ein weiterer Materialabtrag nötig, wird der Abtragszyklus entsprechend oft wiederholt, bis das gewünschte Ergebnis oder die gewünschte Abtrags- oder Schnitttiefe erreicht ist.

Es ist besonders vorteilhaft, wenn die Strahlung durch mindestens einen ein optoelektronisches oder/und spektroskopisches und/oder pyroelektrisches Element aufweisenden Detektor detektiert wird. Solche Detektoren sind ohne Schwierigkeiten am Markt erhältlich, können preiswert bezogen werden und sind einfach zu handhaben. Die optoelektronische, spektroskopische oder pyroelektronische Detektion erlaubt eine Erzeugung des Signals aus der Strahlung im Arbeitsbereich. Zur Erzeugung des Signals kann sowohl die Strahlung des Plasmas, als auch reflektierte Laserstrahlung detektiert werden. Diese Strahlungen unterscheiden sich in der Regel durch ihre Wellenlänge. Durch optische Filter oder ein wellenlängenabhängige Detektion kann bestimmt werden, welche Wellenlängen zur Erzeugung des Signals verwendet werden sollen. Diese Detektoren detektieren die Strahlung außerdem mit einer ausreichenden Geschwindigkeit, um den Bearbeitungsprozess zu verfolgen und eine Steuerung und/oder Regelung des Prozesses zu ermöglichen.

Gemäß einer weiteren vorteilhaften Ausgestaltung des erfindungsgemäßen Verfahrens nimmt die Achse des Beobachtungsstrahlengangs im Arbeitsbereich einen Winkel zur Laserstrahlachse ein. Unter der Achse des Beobachtungsstrahlengangs wird im Wesentlichen die Gerade, welche die detektierte Strahlungsquelle im Arbeitsbereich und den Detektor miteinander verbindet, verstanden. Durch diesen Winkel wird erreicht, dass sich abhängig von der Positionierung des Laserstrahls in Bezug auf eine Vertiefung oder Schnittfuge oder abhängig vom Fortschritt des Abtrags- oder Schneideprozesses die Intensität des Signals ändert. Während an der Oberfläche des Werkstücks viel durch das Plasma entstehende Strahlung oder reflektierte Laserstrahlung detektiert werden kann, wird die detektierbare Strahlung, wenn sich der Spot innerhalb von Vertiefungen oder Schnittfugen befindet, blockiert. Bei einer koaxialen Anordnung des Detektors, wenn die Achse des Beobachtungsstrahlengangs und die Laserstrahlachse zusammenfallen, ist dieser Intensitätsunterschied nicht oder nur schwach ausgeprägt. Ist das Werkstück vollständig durchtrennt, ist ebenfalls eine Verringerung der Intensität des Signals zu verzeichnen, da der Laserstrahl nicht mehr oder nur noch gering im Randbereich der Durchtrennung mit dem Werkstück wechselwirkt.

Vorzugsweise wird die Strahlung durch mindestens einen außerhalb der Schnittebene angeordneten Detektor detektiert. Unter der Schnittebene wird im Wesentlichen die Ebene verstanden, die durch die Schnittfuge aufgespannt wird, in der sich also der Laserstrahl im Arbeitsbereich bewegt. Auf diese Weise wird erreicht, dass die Intensität des Signals von der Positionierung des Laserstrahls in Bezug auf eine Vertiefung oder Schnittfuge oder vom Fortschritt des Abtrags- oder Schneideprozesses abhängt.

Besonders vorteilhaft ist es, wenn die Strahlung durch mindestens zwei beidseitig der Schnittebene angeordnete Detektoren detektiert wird. Auf diese Weise kann die durch das Plasma entstehende Strahlung und/oder die reflektierte Laserstrahlung auf beiden Seiten der Schnittfuge detektiert werden. Hierdurch ist es beispielsweise möglich, eine genauere Zuordnung zwischen der Position des Laserstrahls in Bezug auf die Schnittfuge und dem Signal der Detektoren zu erreichen. Besonders in Bezug auf eine Korrektur der Position des Laserstrahls senkrecht zur Scanrichtung vereinfacht diese Anordnung das Bearbeitungsverfahren.

Gemäß einer weiteren Ausführungsform des erfindungsgemäßen Verfahrens wird das Laserstrahlbearbeiten als Remote-Cutting durchgeführt. Unter Remote-Cutting versteht man ein Verfahren der Laserstrahlbearbeitung, bei dem Laser mit hohen Leistungen und Scanner mit sehr schnellen Strahlableckungen verwendet werden. Das Material wird hierbei fast vollständig verdampft oder durch den entstehenden Dampfdruck zumindest teilweise ausgetrieben. Auf diese Weise kann beispielsweise auf zusätzliches Prozessgas verzichtet werden.

Vorzugsweise wird ein Spotdurchmesser des Laserstrahls von 10 bis 500pm, vorzugsweise 50 bis 100 pm, verwendet. Die Fokussierung des Laserstrahls kann durch entsprechende optische Elemente wie Linsen oder Spiegel realisiert werden. Ein geringer Spotdurchmesser führt zu einer entsprechend hohen Intensität der Strahlung im Arbeitsbereich. In Verbindung mit dem erfindungsgemäßen Verfahren wird die Bearbeitungsgenaugkeit bei diesen geringen Spotdurchmessern deutlich gesteigert.

In einer vorteilhaften Ausgestaltung des erfindungsgemäßen Verfahrens wird das Werkstück vor der Laserstrahlbearbeitung indirekt oder direkt warmumgeformt. Die direkte Warmumformung ist ein einstufiger Prozess, bei welchem Werkstücke aus hochfesten Stahlsorten, beispielsweise Mangan-Bor-Stähle auf Temperaturen oberhalb der AC3-Temperatur erwärmt und umgeformt werden. Die Warmumformung erlaubt es, kostengünstig eine Umformung hochfester Werkstücke vorzunehmen. Die indirekte Warmumformung ist ein zweistufiger Prozess, bei dem der Warmumformung eine Kaltumformung vorausgeht. Hierdurch können größere Komplexitäten der Bauteile erreicht werden. Die indirekte Warmumformung ist jedoch aufwendiger und kostenintensiver als die direkte Warmumforung. Optional wird im gleichen oder in einem zusätzlichen Arbeitsschritt das Werkstück pressgehärtet. Durch das Presshärten können besonders hohe Festigkeiten, beispielsweise Zugfestigkeiten von mehr als 1400 MPa erzielt werden. Hochfeste Werkstücke ermöglichen es, ein optimales Crashverhalten von Karosserieteilen zu erzielen. Allerdings sind mechanische Bearbeitungen an den hochfesten Werkstücken besonders verschleißbehaftet, so dass die Laserbearbeitung nach der Lehre der Erfindung besonders vorteilhaft ist. Mit Hilfe des erfindungsgemäßen Verfahrens können nämlich auch pressgehärtete Werkstücke, beispielsweise Bauteile einer Kraftfahrzeugkarosserie, nahezu verschleißfrei bearbeitet werden.

Vorzugsweise besteht das Werkstück aus Stahl, vorzugsweise aus einem Mangan-Bor-Stahl. Mangan-Bor-Stähle, wie zum Beispiel 22MnB5 oder MBW 1500, bieten höchste Festigkeit und gute Umformeigenschaften. Durch Erwärmung und schnelle Abkühlen kann die Mindestzugfestigkeit des Werkstücks von 500 MPa im Anlieferungszustand auf bis zu 1650 MPa erhöht werden. Mangan-Bor-Stähle werden vorzugsweise direkt warmumgeformt. Das Werkstück kann auch aus mikrolegierten Stählen wie MHZ-Stahl bestehen. Bei allen höherfesten Stählen bietet das erfindungsgemäße Verfahren Vorteile in Bezug auf eine nahezu verschleißfreie Bearbeitung von Werkstücken.

Optional können die Werkstücke auch mit einer feueraluminierten Oberflächenveredelung versehen sein. Diese Beschichtung biete einen guten Schutz vor der Verzunderung, die bei der Warmumformung typischerweise auftritt und sorgt für eine erhöhte Standzeit der Umformwerkzeuge. Auch andere oder zusätzliche Beschichtungen sind möglich, so zum Beispiel Beschichtungen, die eine Verzunderung wirkungsvoll vermeiden und gleichzeitig mittels Additive die Kalt- und/oder Warmumformung unterstützen. Solche Beschichtungen haben nur einen geringen Einfluss auf die Wechselwirkung zwischen Laserstrahlung und Werkstück, sodass beschichtete Werkstücke mit dem erfindungsgemäßen Verfahren bearbeitet werden können.

Die Werkstücke haben vorzugsweise eine Dicke von 0,5 bis 3 mm, vorzugsweise 1 bis 2 mm, insbesondere 1,2 mm bis 1,8 mm. Ein mechanisches Bearbeiten von Werkstücken dieser Dicke, insbesondere von aus hochfesten Stählen hergestellte Werkstücken dieser Dicke, ist aufgrund von Verschleiß der Werkzeuge und der benötigten Kraft besonders problematisch. Das erfindungsgemäße Verfahren ermöglicht hier eine wesentliche Vereinfachung, da eine mechanische Bearbeitung entfallen kann.

Werden Werkstück und Scanner zumindest zeitweise relativ zueinander bewegt, hat dies den Vorteil, dass dadurch der zunächst begrenzte Bereich des Scanfeldes vergrößert werden kann. Die Optiken eines Scanners sind in der Regel nur dazu ausgelegt ein relativ begrenztes Scanfeld von beispielsweise 100 mm x 100 mm abzudecken. Durch eine Bewegung des Scanners und/oder des Werkstücks können dann größere Werkstücke bearbeitet werden. Beispielsweise ist es möglich, Karosseriebauteile, wie zum Beispiel eine B-Säule, einer besonders präzisen Laserstrahlbearbeitung zu unterziehen.

Wird der Laserstrahl zusätzlich über einen Polygonspiegel abgelenkt, kann eine noch größere Freiheit bei der Bewegung des Laserstrahls erzielt werden und komplexere Laserstrahlbearbeitungen insbesondere bei höheren Bearbeitungsgeschwindigkeiten durchgeführt werden.

Schließlich ist das erfindungsgemäße Verfahren besonders zur Bearbeitung von Karosseriebauteilen wie A-, B-, C- oder D-Säulen, Crashboxen, Tunnel oder Längsträgern geeignet. Gerade besagte Bauteile müssen häufig eine sehr große Härte aufweisen, sodass sich die Bearbeitung mittels eines Laserstrahl anbietet. Die Bauteile weisen häufig auch eine äußerst komplexe Form auf, sodass komplexe Bearbeitungswerkzeuge bei der Verwendung des erfindungsgemäßen Verfahrens entfallen. Auch die Genauigkeit der Bearbeitung, beispielsweise von Bohrungen, Zuschnitten oder Ausschnitten, kann gesteigert werden.

Im Folgenden wird eine Vorrichtung zum Laserstrahlbearbeiten eines Werkstücks, insbesondere eines Bauteils eines Kraftfahrzeugs, mit mindestens einem Mittel zum Erzeugen eines Laserstrahls, mindestens einem Scanner, mindestens einem Detektor zur Detektierung der durch das Plasma entstehenden Strahlung und/oder der reflektierten Laserstrahlung und Mittel zur Erzeugung eines Signals aus der detektierten Strahlung, die Mittel vorsieht, mit welchen in Abhängigkeit von dem Signal die Position des Laserstrahls in Bezug auf das Werkstück und/oder die Abtragstiefe regelbar und/oder steuerbar ist, näher beschrieben. Mit dieser Vorrichtung kann insbesondere eines der zuvor genannten Verfahren durchgeführt werden. Mittel zum Regeln und/oder Steuern können beispielsweise ein Computer und eine entsprechende Software sein, die die Signale der Detektoren verarbeiten kann und den Scanner und/oder zusätzliche Positioniersysteme und/oder den Laser steuern kann. Auf diese Weise kann ein Regelkreis aufgebaut werden, der das detektierte Signal zur Regelung des Bearbeitungsprozesses benutzen kann.

Es ist besonders vorteilhaft, wenn die Vorrichtung mindestens zwei beidseitig der Schnittebene angeordnete Detektoren aufweist. Auf diese Weise kann die durch das Plasma entstehende Strahlung und/oder die reflektierte Laserstrahlung auf beiden Seiten der Schnittfuge detektiert werden. Hierdurch ist es beispielsweise möglich, eine genauere Zuordnung zwischen der Position des Laserstrahls in Bezug auf die Schnittfuge und dem Signal der Detektoren zu erreichen. Besonders in Bezug auf eine Korrektur der Position des Laserstrahls senkrecht zur Scanrichtung vereinfacht diese Anordnung das Verfahren.

Bevorzugt ist der mindestens eine Detektor auf der Seite des Werkstücks, die der Einfallsseite des Laserstrahls entspricht, angeordnet. Während des Bearbeitungsprozesses ist die durch das Plasma entstehende Strahlung und/oder die Laserstrahlung fast ausschließlich auf dieser Seite zu detektieren, sodass eine solche Anordnung vorteilhaft ist. Erst nach oder kurz vor dem Durchtrennen des Werkstücks ist auch durch das Plasma entstehende Strahlung und/oder die Laserstrahlung auf der der Einfallsseite abgewandten Seite des Werkstücks detektierbar. Eine Anordnung auf der der Einfallsseite abgewandten Seite bietet sich an, wenn der Bearbeitungsprozess lediglich in Hinsicht auf eine Durchtrennung des Werkstücks optimiert werden soll.

Für weitere Ausgestaltungen und Vorteile der Vorrichtung sei auf die Beschreibung des erfindungsgemäßen Verfahrens verwiesen.

Im Weiteren soll die Erfindung anhand einer Zeichnung in Verbindung mit Ausführungsbeispielen näher erläutert werden. Die Zeichnung zeigt in
- Fig. 1: ein Ausführungsbeispiel einer Vorrichtung zur Durchführung des erfindungsgemäßen Verfahrens in einer Querschnittsansicht,
- Fig. 2: eine vergrößerte schematische Ansicht des Arbeitsbereichs des Laserstrahls aus Fig. 1 mit drei möglichen Positionen des Laserstrahls,
- Fig. 3a-d: die Intensitäten des Signals in Abhängigkeit von der Position des Laserstrahls bzw. vom Fortschritt des Abtrags,
- Fig. 4: einen mit dem erfindungsgemäßen Verfahren bearbeitbaren gefertigten Tunnel in einer schematischen und perspektivischen Darstellung,
- Fig. 5: eine mit dem erfindungsgemäßen Verfahren hergestellte B-Säule.

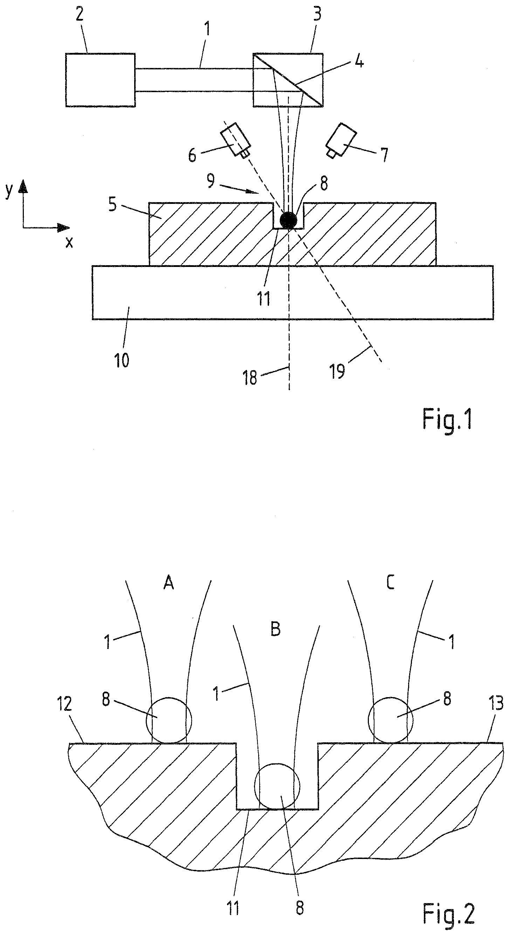

Fig. 1 zeigt ein Ausführungsbeispiel einer Vorrichtung zur Durchführung des erfindungsgemäßen Verfahrens in einer Querschnittsansicht. Der Laserstrahl 1 wird in einer Laserstrahlquelle 2 erzeugt und mittels eines Scanners 3 und Ablenkspiegel 4 auf das Werkstück 5 gelenkt. Die Scanrichtung bzw. Schnittfuge verläuft in Fig. 1 senkrecht zur Querschnittsfläche bzw. Bildebene. Mittels eines ersten linken Detektors 6 und eines zweiten rechten Detektors 7 kann durch das Plasma 8 erzeugte Strahlung und/oder reflektierte Laserstrahlung detektiert werden. Die Achse des Beobachtungsstrahlengangs 19 schließt hierbei mit der Laserstrahlachse 18 einen Winkel ein. Es können aber auch mehr als zwei Detektoren oder auch nur ein einziger Detektor vorgesehen sein. Der Laserstrahl 1 trifft im Arbeitsbereich 9 im Wesentlichen senkrecht auf das Werkstück 5. Das Werkstück 5 kann mittels weiterer Positioniersysteme 10 relativ zum Scanner 3 bewegt werden. Der Materialabtrag bewirkt ein Fortschreiten der Schnittfuge 11 in y-Richtung.

Fig. 2 zeigt eine vergrößerte Ansicht des Arbeitsbereichs mit drei möglichen Positionen A, B und C des Laserstrahls 1. In der Position A ist der Laserstrahl 1 auf der linken Kante 12 der Schnittfuge 11 positioniert, wobei in der Position C der Laserstrahl 1 auf der rechten Kante 13 der Schnittfuge 11 positioniert ist. In der Position B ist der Laserstrahl 1 in der Schnittfuge 11 positioniert. In Abhängigkeit von der Position des Laserstrahls 1 wird durch die Detektoren 6,7 eine unterschiedliche Intensität detektiert. Bei der Bearbeitung von mehrschichtigen Werkstoffen wird von den Detektoren 6,7 auch eine unterschiedliche Wellenlänge detektiert, wenn in Position B durch den Abtrag ein anderes Material bearbeitet wird, als in den Positionen A und C. So können unterschiedliche Eigenschaften der detektierten Strahlung für das erfindungsgemäße Verfahren genutzt werden.

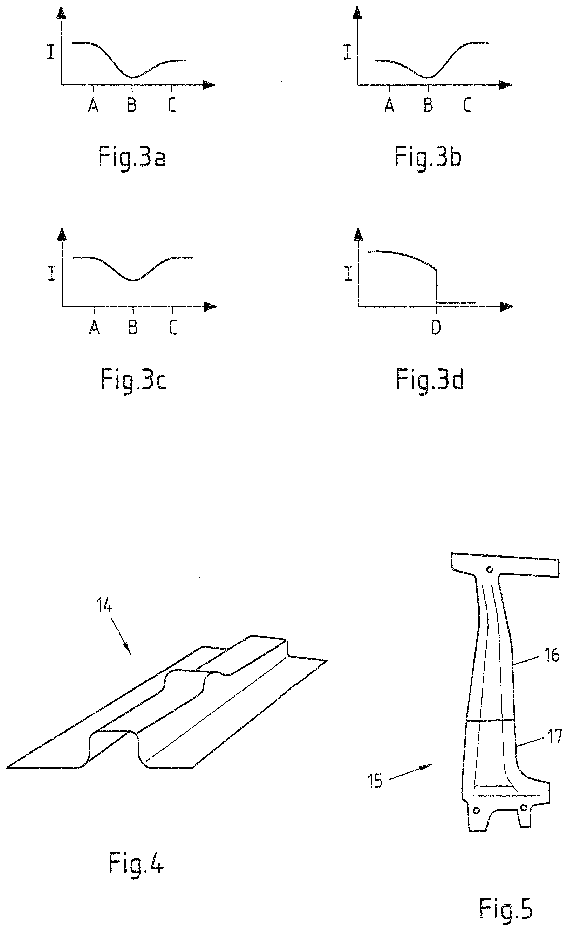

So zeigt Fig. 3a schematisch den Wert der Intensität des Signals des ersten linken Detektors 6 auf der Ordinate in Abhängigkeit von der Position des Laserstrahls 1 auf der Abszisse. Ist der Laserstrahl 1 in Position A, ist das durch den ersten linken Detektor 6 detektierte Signal am größten, wohingegen das detektierte Signal am kleinsten ist, wenn der Laserstrahl 1 in Position B, also innerhalb der Schnittfuge 11, ist. In Position C ist der Laserstrahl 1 ebenfalls wie in Position A außerhalb der Schnittfuge 11, jedoch weiter vom ersten linken Detektor 6 entfernt bzw. in einer Position, die im Vergleich zur Position A ein geringeres Signal am ersten linken Detektor 6 verursacht.

Dem entsprechend zeigt Fig. 3b schematisch den Wert der Intensität des Signals des zweiten rechten Detektors 7 auf der Ordinate in Abhängigkeit von der Position des Laserstrahls 1 auf der Abszisse. Ist der Laserstrahl 1 in Position C, ist das durch den zweiten rechten Detektor 7 detektierte Signal am größten, wohingegen das detektierte Signal am kleinsten ist, wenn der Laserstrahl 1 in Position B, also innerhalb der Schnittfuge 11, ist. In Position A ist der Laserstrahl 1 ebenfalls wie in Position C außerhalb der Schnittfuge 11, jedoch weiter vom zweiten rechten Detektor 7 entfernt bzw. in einer Position, die im Vergleich zur Position C ein geringeres Signal am zweiten rechten Detektor 7 verursacht.

Fig. 3c zeigt nun schematisch eine Überlagerung der beiden Signale aus den Fig. 3a und 3b. Es ist deutlich zu erkennen, dass sich die optimale Position B des Laserstrahls 1 im Bereich des lokalen Minimums der Intensitätsfunktion befindet. Durch einen Regelkreis kann der Scanner 3 während der Bearbeitung so angesteuert werden, dass die Intensität minimal bleibt und der Laserstrahl 1 folglich in der Schnittfuge 11 gehalten werden kann.

Fig. 3d zeigt nun auf der Ordinate schematisch den Verlauf der Intensität, welche von einem der Detektoren 6,7 aufgenommen wird, während ein Werkstück 5 vollständig durchtrennt wird. Auf der Abszisse ist die Tiefe der Schnittfuge und der Durchschnittspunkt D aufgetragen. Wird Material in der Schnittfuge 11 abgetragen, so wird von den Detektoren 6,7 mit größer werdender Tiefe der Schnittfuge 11 immer weniger Strahlung detektiert. Wird das Werkstück 5 lokal vollständig durchtrennt, sinkt die Intensität des Signals deutlich Punkt D, da keine oder nur noch wenig durch das Plasma 8 entstehende Strahlung und/oder reflektierte Laserstrahlung den Arbeitsbereich 9 verlässt und der Laserstrahl 1 das Werkstück 5 nahezu ungehindert passieren kann. So kann in Abhängigkeit von der Position des Laserstrahls 1 festgestellt werden, ob eine Durchtrennung des Werkstücks 5 stattgefunden hat und gegebenenfalls können einzelne Teile des Abtragprozesses wiederholt werden.

Fig. 4 und 5 zeigen Werkstücke 5, welche mit dem erfindungsgemäßen Verfahren und/oder mit der Vorrichtung bearbeitet werden können. Fig. 4 zeigt einen gefertigten Tunnel 14. Dieser kann beispielsweise aus Mangan-Bor-Stahl hergestellt sein und mittels indirekter Warmumformung gefertigt werden. Fig. 5 zeigt B-Säule 15. Diese kann aus zwei Teilen 16,17 zusammengesetzt sein und kann beispielsweise aus feueraluminiertem Mangan-Bor-Stahl und feueraluminiertem mikrolegiertem Stahl, beispielsweise MHZ-Stahl, hergestellt sein. Ein Materialabtrag, insbesondere Bohrungen und Schnitte, an diesen Werkstücken kann mit dem erfindungsgemäßen Verfahren besonders genau und effizient durchgeführt werden.

## Patentansprüche

1. Verfahren zur Laserstrahlbearbeitung eines Werkstücks (5), insbesondere eines Bauteils eines Kraftfahrzeugs, wobei ein Laserstrahl (1) mittels eines Scanners (3) auf das Werkstück (5) gebracht wird, Material des Werkstücks (5) abgetragen wird, die bei dem Prozess in dem Arbeitsbereich (9) durch das Plasma entstehende Strahlung und/oder reflektierte Laserstrahlung detektiert wird und abhängig von der detektierten Plasma- (8) und/oder Laserstrahlung ein Signal erzeugt wird, wobei in Abhängigkeit von dem Signal die Position des Laserstrahls (1) in Bezug auf das Werkstück (5) und/oder die Abtragstiefe geregelt und/oder gesteuert wird,
**dadurch gekennzeichnet, dass**
der Prozess in mehreren Abtragszyklen durchgeführt wird und ein Abtragszyklus, insbesondere der letzte Abtragszyklus, in Abhängigkeit vom Signal wiederholt oder teilweise wiederholt wird, derart, dass eine Korrektur der Positionierung des Laserstrahls (1) auch erst im nächsten Abtragzyklus in einer vorgegebenen Kontur (Schnittfuge (11)) erfolgt.

2. Verfahren nach Anspruch 1,
**dadurch gekennzeichnet, dass**
Material des Werkstücks (5) durch die Laserstrahlbearbeitung abgetragen wird oder das Werkstück (5) geschnitten wird.

3. Verfahren nach einem der Ansprüche 1 oder 2 ,
**dadurch gekennzeichnet, dass**
in Abhängigkeit vom Signal die Position des Laserstrahls (1) in Bezug auf das Werkstück (5) senkrecht zur Scanrichtung geändert wird.

4. Verfahren nach einem der Ansprüche 1 bis 3,
**dadurch gekennzeichnet, dass**
die Strahlung durch mindestens einen ein optoelektronisches oder/und spektroskopisches und/oder pyroelektrisches Element aufweisenden Detektor (6, 7) detektiert wird.

5. Verfahren nach einem der Ansprüche 1 bis 4,
**dadurch gekennzeichnet, dass**
die Achse des Beobachtungsstrahlengangs (19) im Arbeitsbereich einen Winkel zur Laserstrahlachse (18) einnimmt.

6. Verfahren nach einem der Ansprüche 1 bis 5,
**dadurch gekennzeichnet, dass**
das Laserstrahlbearbeiten als Remote-Cutting durchgeführt wird.

7. Verfahren nach einem der Ansprüche 1 bis 6,
**dadurch gekennzeichnet, dass**
das Werkstück (5) vor der Laserstrahlbearbeitung indirekt oder direkt warmumgeformt und optional pressgehärtet wird.

8. Verfahren nach einem der Ansprüche 1 bis 7,
**dadurch gekennzeichnet, dass**
das Werkstück (5) aus Stahl, vorzugsweise aus einem Mangan-Bor-Stahl besteht.

9. Verfahren nach einem der Ansprüche 1 bis 8,
**dadurch gekennzeichnet, dass**
das Verfahren zur Bearbeitung von Karosseriebauteilen wie A-, B-, C- oder D-Säulen, Crashboxen, Tunnel oder Längsträgern verwendet wird.

## Claims

1. Method for laser beam machining of a workpiece (5), in particular of a component of a motor vehicle, wherein a laser beam (1) is applied to the workpiece (5) by means of a scanner (3), material of the workpiece (5) is ablated, the radiation produced by the plasma during the process in the work area (9) and/or reflected laser radiation is detected and a signal is generated depending on the detected plasma (8) and/or laser radiation, wherein the position of the laser beam (1) in relation to the workpiece (5) and/or the ablation depth is regulated and/or controlled depending on the signal, **characterised in that** the process is carried out in a plurality of ablation cycles and an ablation cycle, in particular the last ablation cycle, is repeated or partly repeated depending on the signal in such a way that a correction of the positioning of the laser beam (1) takes place afterwards in the next ablation cycle in a predetermined contour (kerf (11)).

2. Method according to claim 1, **characterised in that** material of the workpiece (5) is ablated by the laser beam machining or the workpiece (5) is cut.

3. Method according to any one of claims 1 or 2, **characterised in that** depending on the signal, the position of the laser beam (1) is altered in relation to the workpiece (5) perpendicular to the scanning direction.

4. Method according to any one of claims 1 to 3, **characterised in that** the radiation is detected by at least one detector (6, 7) comprising an optoelectronic or/and spectroscopic and/or pyroelectronic element.

5. Method according to any one of claims 1 to 4, **characterised in that** the axis of the observation beam path (19) in the work area forms an angle with the laser beam axis (18).

6. Method according to any one of claims 1 to 5, **characterised in that** the laser beam machining is carried out as remote cutting.

7. Method according to any one of claims 1 to 6, **characterised in that**, prior to the laser beam machining, the workpiece (5) is indirectly or directly hot formed and optionally press-hardened.

8. Method according to any one of claims 1 to 7, **characterised in that** the workpiece (5) consists of steel, preferably of a manganese-boron steel.

9. Method according to any one of claims 1 to 8, **characterised in that** the method is used for machining vehicle body components, such as A, B, C or D pillars, crashboxes, tunnels or longitudinal members.

## Revendications

1. Procédé d'usinage par faisceau laser d'une pièce à usiner (5), en particulier d'un composant d'un véhicule automobile, dans lequel un faisceau laser (1) est appliqué sur la pièce à usiner (5) au moyen d'un scanner (3), le matériau de la pièce à usiner (5) est enlevé, le rayonnement produit par le plasma pendant le processus dans la zone de travail (9) et/ou le rayonnement laser réfléchi est détecté et un signal est généré en fonction du rayonnement de plasma détecté (8) et/ou du rayonnement laser détecté, la position du faisceau laser (1) par rapport à la pièce à usiner (5) et/ou la profondeur d'ablation étant réglée et/ou contrôlée en fonction du signal,
**caractérisé en ce que**
le processus est effectué en plusieurs cycles d'ablation et un cycle d'ablation, en particulier le dernier cycle d'ablation, est répété ou partiellement répété en fonction du signal de telle sorte que le positionnement du faisceau laser (1) ne soit corrigé que dans le cycle d'ablation suivant dans un contour prédéterminé (trait de scie (11)).

2. Procédé selon la revendication 1,
**caractérisé en ce que**
matériau de la pièce à usiner (5) est enlevée par usinage par faisceau laser ou la pièce à usiner (5) est coupée.

3. Procédé selon l'une des revendications 1 ou 2,
**caractérisé en ce que**
la position du faisceau laser (1) par rapport à la pièce à usiner (5) est modifiée perpendiculairement à la direction de balayage en fonction du signal.

4. Procédé selon l'une des revendications 1 à 3,
**caractérisé en ce que**
le rayonnement est détecté par au moins un détecteur (6, 7) ayant un élément optoélectronique ou/et spectroscopique et/ou pyroélectrique.

5. Procédé selon l'une des revendications 1 à 4,
**caractérisé en ce que**
l'axe du trajet du faisceau d'observation (19) dans la zone de travail forme un angle avec l'axe du faisceau laser (18).

6. Procédé selon l'une des revendications 1 à 5,
**caractérisé en ce que**
l'usinage par faisceau laser s'effectue sous forme de remote cutting.

7. Procédé selon l'une des revendications 1 à 6,
**caractérisé en ce que**
la pièce à usiner (5) est formée à chaud indirectement ou directement avant l'usinage par faisceau laser et éventuellement durcie par pressage.

8. Procédé selon l'une des revendications 1 à 7,
**caractérisé en ce que**
la pièce à usiner (5) est en acier, de préférence en acier au manganèse-bore.

9. Procédé selon l'une des revendications 1 à 8,
**caractérisé en ce que**
le procédé est utilisé pour l'usinage de composants de carrosserie telles que les piliers A, B, C ou D, les crash box, les tunnels ou les poutres longitudinales.
